# EUROPEAN PATENT APPLICATION

(11) **EP 4 831 352 A1**
(43) Date of publication of application: **28.10.2026**
(21) Application number: 24907799.1
(22) Date of filing: 12.11.2024
(51) Int. Cl.: C25B 11/091, C25B 11/067, C25B 1/04, C25B 9/19, C25B 13/08, C25B 13/02, C25B 11/065, C25B 11/081, C25B 11/095, B01J 35/53

(54) **CATALYST FOR OXYGEN EVOLUTION REACTION OF WATER ELECTROLYSIS CELL, AND MEMBRANE-ELECTRODE ASSEMBLY FOR WATER ELECTROLYSIS CELL AND WATER ELECTROLYSIS CELL COMPRISING SAME**

(30) Priority: 22.12.2023 KR 20230190210; 07.11.2024 KR 20240157360
(71) Applicant: Kolon Industries, Inc., Seoul 07793 (KR)
(72) Inventor: KIM, Jung Ho, Seoul 07793 (KR); KIM, Jun Young, Seoul 07793 (KR); LEE, Ju Sung, Seoul 07793 (KR); LIM, Youngjoon, Seoul 07793 (KR); PARK, Hyun Jin, Seoul 07793 (KR)
(74) Representative: Vossius & Partner Patentanwälte Rechtsanwälte mbB
(86) International application number: PCT/KR2024/017886
(87) International publication number: WO 2025/135514

(57) **Abstract**

The present disclosure relates to: a catalyst for an oxygen evolution reaction of a water electrolysis cell; and a membrane-electrode assembly for a water electrolysis cell, and a water electrolysis cell, comprising same. By modifying the surfaces of core particles included in the catalyst for an oxygen evolution reaction of a water electrolysis cell, so as to be hydrophobic, durability against water during a reaction can be improved, and at the same time bonding with ion conductor side chains can be increased, thereby improving performance and durability.

## Description

### [Technical Field]

The present disclosure relates to a catalyst for an oxygen evolution reaction of a water electrolysis cell, a membrane-electrode assembly for a water electrolysis cell including the same, and a water electrolysis cell, and more particularly, to a catalyst for an oxygen evolution reaction of a water electrolysis cell, a membrane-electrode assembly for a water electrolysis cell including the same, and a water electrolysis cell, in which durability against water during a reaction is improved by hydrophobically modifying a surface of core particles including a noble metal oxide, and at the same time, performance and durability may be improved through an increase in bonding with an ion conductor side chain.

The present disclosure relates to a result of a project (Project Unique No.: 20022451) conducted with the support of the Materials and Components Technology Development Program of the Ministry of Trade, Industry and Energy and the Korea Evaluation Institute of Industrial Technology (KEIT).

### [Background Art]

Recent energy demands and environments require sustainability, environmental friendliness, and high efficiency, and among them, hydrogen is receiving attention as a source of renewable energy. Renewable energy, represented by solar power, wind power, and the like, is receiving much attention because it may replace fossil fuels, which cause environmental problems and are being depleted, due to its environmentally friendly and sustainable characteristics and advantages.

However, since such renewable energy has an unstable supply due to inconsistent weather, regional constraints, and characteristics, it is an obstacle to expansion as a next-generation power generation source.

In order to overcome this, hydrogen is attracting attention as a raw material for renewable energy.

Hydrogen energy is classified into gray, blue, and green hydrogen according to production method; gray hydrogen refers to by-product hydrogen produced as a by-product of petrochemical or steel-making processes and extracted hydrogen produced through a catalytic reaction using fossil fuels; and blue hydrogen refers to hydrogen in which carbon dioxide emitted when producing gray hydrogen is captured and not emitted into the atmosphere.

Gray and blue hydrogen have a problem in that carbon dioxide is generated during production process or cannot be completely removed because fossil fuels are used.

Green hydrogen refers to hydrogen produced by electrolyzing limitless water, and because carbon dioxide is not generated in a process of producing hydrogen, it is in the spotlight as an ultimate eco-friendly energy source. To produce green hydrogen, water electrolysis technology is required.

Water electrolysis technology refers to an electrochemical technology that generates hydrogen and oxygen by electrolyzing water and transporting ions through a separator. Water electrolysis may be classified into two half-cell reactions, one of which is a hydrogen evolution reaction (HER) occurring at a reduction electrode, and the other of which is an oxygen evolution reaction (OER) occurring at an oxidation electrode.

The types of the water electrolysis typically include polymer electrolyte membrane (PEM) water electrolysis, alkaline electrolysis (AEC), anion exchange membrane (AEM) water electrolysis, and solid oxide electrolysis cell (SOECs) water electrolysis depending on the electrolyte membrane.

Among them, polymer electrolyte membrane (PEM) water electrolysis is a method of using a polymer electrolyte membrane as an electrolyte, and for example, uses a cation exchange membrane, such as Nafion, through which hydrogen ions may move as the electrolyte. Polymer electrolyte water electrolysis has advantages in that it may be operated at a high current density using a platinum catalyst and a cation exchange membrane, and miniaturization of a device is possible due to high energy efficiency.

As a catalyst for such polymer electrolyte membrane water electrolysis, a catalyst in which noble metal nanoparticles are supported on a carbon support is typically used, but such a catalyst has a disadvantage of poor durability against water, and a problem in that bonding with hydrophobic ion conductor side chains is difficult.

### [Disclosure]

### [Technical Problem]

According to an embodiment, a catalyst for an oxygen evolution reaction of a water electrolysis cell is provided, in which durability against water during a reaction is improved by hydrophobically modifying a surface of core particles comprising a noble metal oxide, and at the same time, performance and durability are improved by increasing bonding with ion conductor side chains.

According to another embodiment, there are provided a membrane-electrode assembly for a water electrolysis cell comprising the catalyst for oxygen evolution reaction of the water electrolysis cell, and a water electrolysis cell.

### [Technical Solution]

A catalyst for an oxygen evolution reaction of a water electrolysis cell according to an embodiment comprises composite active particles comprising core particles including a noble metal oxide, and having a hydrophobic surface including a fluorine group, a silane compound, a hydrophobic polymer, or a combination thereof.

The composite active particles may have a contact angle with respect to water in a range of 25° to 200°.

The noble metal oxide may include IrOₓ (wherein x is an integer of 1 to 3), RuOₓ (wherein x is an integer of 1 to 3), IrMOₓ (wherein M includes Ru, Sn, Ti, Te, Ta, Nb, Sb, Se, W, or a combination thereof, and the x is an integer of 1 to 3), or a combination thereof.

The composite active particles may include the fluorine group in a range of 3 wt% to 20 wt% based on 100 wt% of the core particles.

The composite active particles may further include a hydrophobic surface layer positioned on the core particles, and the hydrophobic surface layer may include the fluorine group, the silane compound, the hydrophobic polymer, or a combination thereof.

An area of the hydrophobic surface layer of the composite active particles may be in a range of 50% to 100% with respect to a total surface area of the core particles.

A thickness of the hydrophobic surface layer may be 1 nm to 8 nm.

The fluorine group is derived from an organic fluorine compound, and the hydrophobic surface layer including the fluorine group may further include the organic fluorine compound.

The silane compound may include methyltrimethoxysilane, trimethylethoxysilane, trimethylchlorosilane, 3-aminopropyltrimethoxysilane, 3-aminopropyltriethoxysilane, 3-aminopropylmethyldiethoxysilane, a combination thereof, or condensates thereof.

The composite active particles may include the silane compound in a range of 5 wt% to 30 wt% based on 100 wt% of the core particles.

The hydrophobic polymer may include an acrylic-based polymer, an epoxy-based polymer, a polyamide-based polymer, a polyethylene-based polymer, an EVC-based polymer, a polyester-based polymer, a PVC-based polymer, a polyurethane, or a combination thereof.

The composite active particles may include the hydrophobic polymer in a range of 7 wt% to 40 wt% based on 100 wt% of the core particles.

A content of the composite active particles may be greater than or equal to 60 wt% based on 100 wt% of the catalyst for an oxygen evolution reaction.

It may further include a support supporting the composite active particles, and the support may include a metal oxide.

The support may be included in an amount of 10 parts by weight to 200 parts by weight based on 100 parts by weight of the composite active particles.

According to another embodiment, a membrane-electrode assembly for a water electrolysis cell comprises; a polymer electrolyte membrane; an oxygen evolution electrode positioned on one surface of the polymer electrolyte membrane and comprising the catalyst for an oxygen evolution reaction; and a hydrogen evolution electrode positioned on the other surface of the polymer electrolyte membrane.

The membrane-electrode assembly for a water electrolysis cell may have a voltage increase rate represented by Equation 1 below of less than or equal to 7%. [Equation 1] 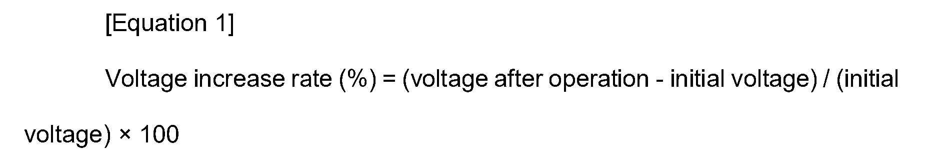 Voltage increase rate (%) = (voltage after operation - initial voltage) / (initial voltage) × 100

According to still another embodiment, a water electrolysis cell comprises the membrane-electrode assembly.

### [Advantageous Effects]

According to an embodiment, a catalyst for an oxygen evolution reaction of a water electrolysis cell may have improved durability against water during a reaction by modifying the surface thereof to be hydrophobic, and at the same time, may have improved performance and durability due to an increase in bonding with ion conductor side chains.

### [Brief Description Of The Drawings]

FIGS. 1 and 2 are side views showing composite active particles according to an embodiment.
FIG. 3 is a schematic view showing a membrane-electrode assembly (MEA) for a water electrolysis cell according to an embodiment.
FIG. 4 is a photograph showing a result of measuring a contact angle with respect to water of a catalyst for an oxygen evolution reaction of a water electrolysis cell prepared in Examples 1 to 4 and Comparative Example.
FIG. 5 is a graph showing a result of evaluating I-V characteristics of a membrane-electrode assembly comprising a catalyst for an oxygen evolution reaction of a water electrolysis cell prepared in Examples 1 to 4 and Comparative Example.

### [Best Mode]

Hereinafter, embodiments of the present disclosure will be described in detail so that those of ordinary skill in the art to which the present disclosure pertains may easily implement them. However, the present disclosure may be implemented in various different forms and is not limited to the embodiments described herein.

In the present specification, "a combination thereof" means a mixture, a laminate, a composite, a copolymer, an alloy, a blend, a reaction product, and the like of constituents.

In the present specification, terms such as "comprise", "be provided with", or "have" are intended to designate the presence of specified features, numbers, steps, components, or a combination thereof, but it should be understood that they do not preclude the possibility of the presence or addition of one or more other features, numbers, steps, components, or a combination thereof in advance.

Unless otherwise defined in the present specification, "substituted" means that a hydrogen atom in a compound is substituted with a substituent including a halogen atom (F, Cl, Br, or I), a hydroxy group, an alkoxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C30 aryl group, a C7 to C30 arylalkyl group, a C1 to C4 alkoxy group, a C1 to C20 heteroalkyl group, a C3 to C20 heteroarylalkyl group, a C3 to C30 cycloalkyl group, a C3 to C15 cycloalkenyl group, a C6 to C15 cycloalkynyl group, a C2 to C20 heterocycloalkyl group, or a combination thereof.

Unless otherwise defined in the present specification, an "alkyl group" means a linear or branched, saturated, monovalent hydrocarbon group (for example, a methyl group, an ethyl group, a propyl group, an isobutyl group, a sec-butyl group, a tert-butyl group, a pentyl group, an iso-amyl group, a hexyl group, etc.).

Unless otherwise defined in the present specification, an "alkenyl group" means a linear or branched, unsaturated, monovalent hydrocarbon group having at least one carbon-carbon double bond (for example, an ethenyl group).

Unless otherwise defined in the present specification, an "alkoxy group" means an alkyl group connected through oxygen, and means, for example, a methoxy group, an ethoxy group, and a sec-butyloxy group.

### 1. Catalyst for an oxygen evolution reaction of a water electrolysis cell

In the present specification, a catalyst for an oxygen evolution reaction means a catalyst applied to an electrode (hereinafter, an "oxygen evolution electrode") in which an oxygen evolution reaction (OER) occurs. That is, it is a catalyst included in the oxygen evolution electrode to be described later.

According to an embodiment, a catalyst for an oxygen evolution reaction of a water electrolysis cell comprises composite active particles comprising core particles comprising a noble metal oxide, and having a hydrophobic surface comprising a fluorine group, a silane compound, a hydrophobic polymer, or a combination thereof.

The "surface" refers to an outer portion of the core particles, and in the present specification, the composite active particles refers to cases where the core particles are modified to have a hydrophobic surface, or cases where the core particles have a hydrophobic surface and simultaneously further comprise a hydrophobic surface layer having a thickness within a predetermined range. Specific details on the hydrophobic surface layer will be described below.

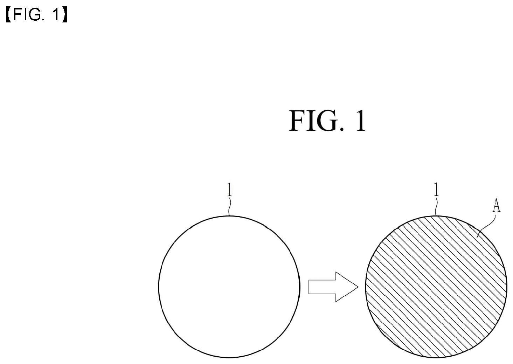

The composite active particles included in the catalyst for an oxygen evolution reaction of a water electrolysis cell will be described with reference to FIG. 1.

FIG. 1 is a side view showing composite active particles according to an embodiment. FIG. 1 illustrates composite active particles having only a hydrophobic surface.

In FIG. 1, the composite active particles (3) comprise core particles (1) comprising a noble metal oxide, and have a hydrophobic surface (A) by modifying the core particles (1) with a hydrophobic surface. In FIG. 1, although it is illustrated as having the hydrophobic surface (A) on the entire surface of the core particles (1), this is merely to indicate for convenience that it may be formed on the surface of the core particles (1), and is not limited thereto.

The composite active particles having the hydrophobic surface (A) may exhibit hydrophobicity (hydrophobic), and the hydrophobicity (hydrophobic) in this case may be represented by a contact angle with respect to water.

The composite active particles may have a contact angle with respect to water within a predetermined range. The method for measuring the contact angle with respect to water is in accordance with the method described in "Measurement of contact angle with respect to water" of Evaluation Example 1 in the present specification.

For example, a lower limit of the contact angle with respect to water of the composite active particles may be about 25°, 30°, 35°, 40°, 45°, 50°, 55°, 60°, 65°, 70°, 75°, 80°, 85°, 90°, 95°, 100°, 105°, 110°, 115°, 120°, 130°, 140°, or 150°, and an upper limit thereof may be about 200°, 195°, 190°, 185°, 180°, 175°, 170°, 165°, 160°, 155°, 150°, 145°, 140°, 135°, 130°, 125°, 120°, 115°, 110°, 105°, or 100°.

The contact angle with respect to water of the composite active particles may be greater than or equal to, or greater than any one of the above-described lower limits; less than or equal to, or less than any one of the above-described upper limits; or within a range of greater than or equal to, or greater than any one of the above-described lower limits and less than or equal to, or less than any one of the above-described upper limits.

By including the composite active particles having the contact angle with respect to water within the range, durability against water may be improved, and simultaneously, performance and durability resulting from increased bonding with side chains of an ion conductor may be improved.

The hydrophobic surface, as described above, comprises a fluorine group, a silane compound, a hydrophobic polymer, or a combination thereof.

Hereinafter, cases in which the hydrophobic surface comprises the fluorine group, the silane compound, or the hydrophobic polymer will be respectively described.

In an embodiment, the hydrophobic surface may comprise a fluorine group. In this case, the fluorine group may be attached to or substituted on the core particles.

For example, the fluorine group may be ( i ) formed by a plasma treatment under a fluorine-containing gas or ( ii ) formed by a heat treatment of a mixture obtained by mixing the core particles with a fluorine-containing precursor.

Hereinafter, the plasma treatment and the heat treatment will be respectively described.

In an embodiment, the fluorine group may be formed by a plasma treatment under a fluorine-containing gas. The plasma treatment may be performed by introducing the core particles into a plasma generating device and then generating plasma under the fluorine-containing gas.

As the fluorine-containing gas, a fluorine-containing molecular gas may be used alone, or a mixed gas in which the fluorine-containing molecular gas and a diluent gas are mixed may be used.

The fluorine-containing molecular gas may include tetrafluoromethane (CF₄), trifluoromethane (CHF₃), dichlorodifluoromethane (CF₂Cl₂), chlorotrifluoromethane (CF₃Cl), hexafluoroethane (C₂F₆), pentafluoroethane (CF₃CHF₂), 1,1,1,2-tetrafluoroethane (CF₃CFH₂), octafluoropropane (C₃F₈), 1,1,1,2,3,3,3-heptafluoropropane (CF₃CHFCF₃), 1,1,1,3,3-pentafluoropropane (CF₃CH₂CHF₂), 1,1,1,3,3-pentafluorobutane (CF₃CH₂CF₂CH₃), nitrogen trifluoride (NF₃), sulfur hexafluoride (SF₆), or a combination thereof.

The diluent gas may include nitrogen gas, helium gas, argon gas, neon gas, krypton gas, xenon gas, radon gas, or a combination thereof.

In an example, the fluorine-containing molecular gas may be used alone as the fluorine-containing gas.

During the plasma treatment, the gas flow rate, temperature, power, and time may be appropriately adjusted to effectively facilitate the reaction between the core particles and plasma.

For example, the gas flow rate may be in a range of 0.1 sccm to 300 sccm, the temperature may be in a range of 2 °C to 25 °C, the power may be in a range of 100 W to 2000 W, and the time may be in a range of 0.1 seconds to 10 minutes, but are not limited thereto.

In another embodiment, the fluorine group may be formed by putting a fluorine-containing precursor and core particles into a reaction vessel, mixing them to obtain a mixture, and performing a heat treatment on the mixture. In the present specification, the fluorine-containing precursor refers to a material that contains fluorine but is in a stage before a fluorine group is attached to a surface of the core particles.

As the fluorine-containing precursor, an organic fluorine compound monomer or an inorganic fluorine compound may be used without using a fluorine-containing polymer.

When a fluorine-containing polymer is used as a precursor, the surface of the core particles is coated with the polymer. A thick polymer coating layer has a problem in that it degrades the activity of the catalyst for an oxygen evolution reaction and makes it difficult to uniformly form a hydrophobic surface on the entire surface of the catalyst for an oxygen evolution reaction. In addition, after the heat treatment, a fluorine group does not exist on the surface of the catalyst for an oxygen evolution reaction, and thus it is difficult to achieve the object of the present disclosure.

The organic fluorine compound monomer may include R'-Fₓ. The R' may be an alkyl group, an aryl group, a benzyl group, a vinyl group, or an acyl group, and the x may be an integer of 1 to 6. More specifically, the organic fluorine precursor may be C₂H₅F (ethyl fluoride), C₇H₇F (benzyl fluoride), CH₃COF (acetyl fluoride), (CNF)₃ (cyanuric fluoride), C₂H₃F (vinyl fluoride), (CH₃)₄NF (tetramethylammonium fluoride), or a mixture thereof, but is not limited thereto.

In addition, the inorganic fluorine compound may include M-Fₓ. The M may be H, NH₄, Ca, Si, P, B, Al, or a compound thereof, and the x may be an integer of 1 to 6. More specifically, the inorganic fluorine compound may be HF, NH₄F, CaF₂, SiF₆, PF₃, PF₅, (NH₄)₂SiF₆, ClF₆, NH₄BF₄, (NH₄)₂AlF₆, or a mixture thereof, but is not limited thereto. When HF is used as a fluorine-containing precursor, careful handling is required.

The mixing may be performed according to a known method.

For example, the mixing may be performed using a homogeneous mixer, a high-pressure disperser, a ball mill, a powder mixer, a resonant acoustic mixer, or the like.

The temperature and the time during the heat treatment process may be appropriately adjusted as necessary.

In an example, the temperature may be in a range of 150 °C to 300 °C, and the time may be in a range of 2 hours to 4 hours, but are not limited thereto.

The composite active particles may include the fluorine group within a predetermined range to have the contact angle with respect to water within the above-described range.

For example, based on 100 wt% of the core particles, a lower limit of a content of the fluorine group included in the composite active particles may be about 3 wt%, 4 wt%, 5 wt%, 6 wt%, or 7 wt%, and an upper limit thereof may be about 20 wt%, 18 wt%, 16 wt%, 14 wt%, 12 wt%, 10 wt%, 9 wt%, 8 wt%, or 7 wt%. The composite active particles may include the fluorine group, based on 100 wt% of the core particles in a range of greater than or equal to, or greater than any one lower limit among the above-described lower limits; less than or equal to, or less than any one upper limit among the above-described upper limits; or greater than, or equal to or greater than any one lower limit among the above-described lower limits, and less than, or equal to or less than any one upper limit among the above-described upper limits.

When the fluorine group is present on the surface of the core particles within the above-described range, the contact angle with respect to water within the above-described range may be secured, and accordingly, durability against water may be improved, and at the same time, bonding with a side chain of an ion conductor may be increased, so that performance and durability may be improved.

In another embodiment, the composite active particles may have a hydrophobic surface comprising a silane compound, a hydrophobic polymer, or a combination thereof.

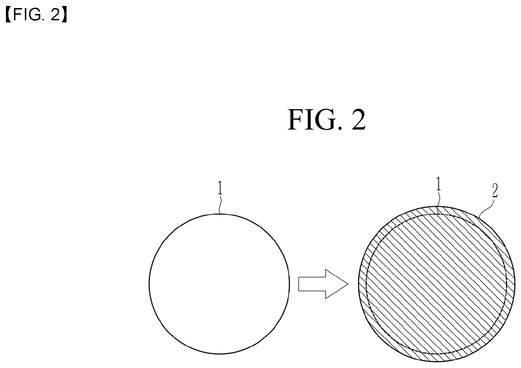

FIG. 2 is a side view illustrating composite active particles according to another embodiment. FIG. 2 illustrates composite active particles further comprising a hydrophobic surface layer positioned on core particles together with a hydrophobic surface.

In FIG. 2, when the composite active particles (3) have a hydrophobic surface comprising the silane compound, the hydrophobic polymer, or a combination thereof, the composite active particles (3) may have the hydrophobic surface on the core particles (1), and may further comprise a hydrophobic surface layer (2) positioned on the core particles (1).

In an example, the composite active particles (3) may further comprise a hydrophobic surface layer (2) positioned on the core particles (1), and the hydrophobic surface layer (2) may comprise a fluorine group, the silane compound, a hydrophobic polymer, or a combination thereof.

The hydrophobic surface layer (2) may be positioned on the core particle (1).

In order for the composite active particles to have the above-described contact angle with respect to water, the area of the hydrophobic surface layer may be appropriately adjusted.

A lower limit of the area of the hydrophobic surface layer of the composite active particles with respect to the total surface area of the core particles may be about 50%, 55%, 60%, 65%, 70%, 75%, 80%, or 85%, and an upper limit thereof is not particularly limited, but may be about 100%, 95%, 90%, 85%, 80%, or 75%. The area of the hydrophobic surface layer of the composite active particles with respect to the total surface area of the core particles may be greater than, or equal to or greater than any one lower limit among the above-described lower limits; or may be in a range of greater than, or equal to or greater than any one lower limit among the above-described lower limits and less than, or equal to or less than any one upper limit among the above-described upper limits.

By comprising the hydrophobic surface layer within the above-described range, the durability of the catalyst for an oxygen evolution reaction against water may be improved, and at the same time, the bonding with an ion conductor side chain may be increased, thereby providing a catalyst for an oxygen evolution reaction of a water electrolysis cell having improved performance and durability.

The thickness of the hydrophobic surface layer may be appropriately adjusted as necessary, and for example, a lower limit of the thickness of the hydrophobic surface layer may be about 1 nm, 1.5 nm, 2 nm, 2.5 nm, 3 nm, 3.5 nm, 4 nm, 4.5 nm, or 5 nm, and an upper limit thereof may be about 8 nm, 7 nm, 6 nm, 5 nm, 4 nm, or 3 nm. The thickness of the surface layer may be greater than or equal to, or greater than any one lower limit among the above-described lower limits; less than, or equal to or less than any one upper limit among the above-described upper limits; or have a range of greater than, or equal to or greater than any one lower limit among the above-described lower limits and less than, or equal to or less than any one upper limit among the above-described upper limits.

According to an embodiment, the hydrophobic surface layer may comprise a fluorine group. The fluorine group included in the hydrophobic surface layer may be "(ii) formed by heat-treating a mixture obtained by mixing the core particles with a fluorine-containing precursor", and may particularly correspond to a case where the fluorine-containing precursor is an organic fluorine compound monomer.

For example, the fluorine group may be derived from an organic fluorine compound monomer. By heat-treating a mixture obtained by mixing the core particles with a fluorine-containing precursor, fluorine groups may be formed on the surface of the core particles, while a hydrophobic surface layer including an organic fluorine compound monomer may be simultaneously formed.

That is, the hydrophobic surface layer may comprise the organic fluorine compound monomer together with the fluorine group derived from the organic fluorine compound monomer.

The types of the organic fluorine compound monomers are as described above.

According to an embodiment, a hydrophobic surface layer may comprise a silane compound.

The silane compound may include methyltrimethoxysilane (methyltrimethoxysiane), trimethylethoxysilane (trimethylethoxysilane), trimethylchlorosilane (trimethylchlorosilane), 3-aminopropyltrimethoxysilane (3-aminopropyltrimethoxysilane), 3-aminopropyltriethoxysilane (3-aminopropyltriethoxysilane), 3-aminopropylmethyldiethoxysilane (3-aminopropylmethyldiethoxysilane), a combination thereof, or a condensate thereof.

When the silane compound is included within a predetermined range, it may have the above-described contact angle with respect to water, and accordingly, the object of the present disclosure may be achieved.

Based on 100 wt% of the core particles, a lower limit of the content of the silane compound may be about 5 wt%, 5.2 wt%, 5.4 wt%, 5.6 wt%, 5.8 wt%, 6 wt%, 6.2 wt%, 6.4 wt%, 6.6 wt%, 6.8 wt%, 7 wt%, or 7.2 wt%, and an upper limit thereof may be about 30 wt%, 28 wt%, 26 wt%, 24 wt%, 22 wt%, 20 wt%, 18 wt%, 16 wt%, 14 wt%, 12 wt%, 10 wt%, or 8 wt%.

The silane compound may be included in a range of greater than, or equal to or greater than any one lower limit among the above-described lower limits; less than, or equal to or less than any one upper limit among the above-described upper limits; or greater than, or equal to or greater than any one lower limit among the above-described lower limits and less than, or equal to or less than any one upper limit among the above-described upper limits, based on 100 wt% of the core particles. When the content of the silane compound in the surface layer satisfies the above range, the contact angle with respect to water within the above-described range may be secured, and accordingly, durability against water may be improved, and at the same time, bonding with the side chains of an ion conductor may be increased, whereby performance and durability may be improved.

According to another embodiment, the hydrophobic surface layer may comprise a hydrophobic polymer.

In the present specification, the hydrophobic polymer excludes the condensate exemplified as the silane compound.

The hydrophobic polymer refers to a material not dissolved in moisture or other polar solvents, and may include, for example, an acrylic-based polymer, an epoxy-based polymer, a polyamide-based polymer, a polyethylene-based polymer, an EVC-based polymer, a polyester-based polymer, a PVC-based polymer, polyurethane, or a combination thereof.

Specifically, the hydrophobic polymer may include polymethylmethacrylate (polymethylmethacrylate), polycarbonate (polycarbonate), polyurethane (polyurethane), tetrafluoroethylene (Tetrafluoroethylene), chlorotrifluoroethylene (Chlorotrifluoroethylene), vinylidenefluoride (Vinylidenefluoride), vinylfluoroide (Vinylfluoroide), hexafluoropropylene (Hexafluoropropylene), perfluorovinylether (Perfluorovinylether), perfluoromethylvinylether (Perfluoromethylvinylether), polyvinylidene fluoride, polytetrafluoroethylene (PTFE, polytetrafluoroethylene), polychlorotrifluoroethylene (PCTFE, polychlorotrifluoroethylene), polyvinylidenedifluoride (PVDF, polyvinylidenedifluoride), fluorinated ethylene propylene copolymer (FEP, fluorinated ethylene propylene copolymer), poly ethylene-co-tetra fluoro ethylene (ETFE, poly ethylene-co-tetra fluoro ethylene), poly ethylene-co-chloro trifluoro ethylene (ECTFE, poly ethylene-co-chloro trifluoro ethylene), poly tetra fluoro ethylene-co-fluoro alkyl vinyl ether (PFA, poly tetra fluoro ethylene-co-fluoro alkyl vinyl ether), or a combination thereof.

When the hydrophobic polymer is included within a predetermined range, it may have the above-described contact angle with respect to water, and accordingly, the object of the present disclosure may be achieved.

Based on 100 wt% of the core particles, a lower limit of the content of the hydrophobic polymer may be about 7 wt%, 7.5 wt%, 8 wt%, 8.5 wt%, 9 wt%, 9.5 wt%, or 10 wt%, and an upper limit thereof may be about 40 wt%, 35 wt%, 30 wt%, 25 wt%, 20 wt%, 18 wt%, 16 wt%, 14 wt%, 12 wt%, or 10 wt%.

The hydrophobic polymer may be included in a range of greater than, or equal to or greater than any one lower limit among the above-described lower limits; less than, or equal to or less than any one upper limit among the above-described upper limits; or greater than, or equal to or greater than any one lower limit among the above-described lower limits and less than, or equal to or less than any one upper limit among the above-described upper limits, based on 100 wt% of the core particles. When the content of the hydrophobic polymer in the surface layer satisfies the above range, the contact angle with respect to water within the above-described range may be secured, and accordingly, durability against water may be improved, and at the same time, bonding with a side chain of an ion conductor may be increased, whereby performance and durability may be improved.

The core particles may comprise a noble metal oxide.

For example, the noble metal may be a non-platinum based precious metal (Non-platinum based precious metal), and for example, the non-platinum based precious metal may include palladium (Pd), ruthenium (Ru), iridium (Ir), osmium (Os), an alloy thereof, or a combination thereof.

For example, Ir-Fe, Ir-Ru, Ir-Os, Co-Fe, Co-Ru, Co-Os, Rh-Fe, Rh-Ru, Rh-Os, Ir-Ru-Fe, Ir-Ru-Os, Rh-Ru-Fe, Rh-Ru-Os, or a combination thereof may be used as the alloy.

A noble metal oxide according to an embodiment may include IrOₓ (wherein x is an integer of 1 to 3), RuOₓ (wherein x is an integer of 1 to 3), IrMOₓ (wherein M includes Ru, Sn, Ti, Te, Ta, Nb, Sb, Se, W, or a combination thereof, and the x is an integer of 1 to 3), or a combination thereof.

More preferably, the noble metal oxide may include IrOₓ (wherein x is an integer of 1 to 3), IrMOₓ (wherein M includes Ru, Sn, Ti, Te, Ta, Nb, Sb, Se, W, or a combination thereof, and the x is an integer of 1 to 3), or a combination thereof, and more specifically, the IrMOₓ may be IrRuOₓ.

Compared to a case in which the noble metal oxide is ruthenium oxide (RuOₓ), durability may be improved in a case of iridium and ruthenium oxide (IrRuOₓ), and the iridium ruthenium oxide (IrRuOₓ) may have excellent performance equivalent to that of iridium oxide (IrOₓ).

A content of the composite active particles may be greater than or equal to 60 wt% based on 100 wt% of the catalyst for an oxygen evolution reaction, and for example, may be greater than or equal to 60 wt%, greater than or equal to 70 wt%, greater than or equal to 80 wt%, or greater than or equal to 90 wt%, and may be less than 100 wt%, less than or equal to 99.9 wt%, less than or equal to 90 wt%, less than or equal to 80 wt%, or less than or equal to 70 wt%.

When the content of the composite active particles in the catalyst for an oxygen evolution reaction satisfies the above range, performance and durability may be improved.

The catalyst for an oxygen evolution reaction of a water electrolysis cell may further comprise a support supporting the composite active particles.

The support may be porous carbon, a conductive metal, a metal oxide, or a combination thereof.

The porous carbon may be activated carbon, carbon fiber, graphite fiber, graphene, or carbon nanotube, the conductive metal may be tungsten, titanium, nickel, ruthenium, tantalum, tin, cobalt, niobium, or a combination thereof, and the metal oxide may be an oxide of metals including tungsten, titanium, nickel, ruthenium, tantalum, tin, cobalt, niobium, or a combination thereof.

In an example, the support may be a metal oxide, and for example, may be titanium dioxide (TiO₂) or tin dioxide (SnO₂).

The support may be included in an amount of 10 parts by weight to 200 parts by weight based on 100 parts by weight of the composite active particles.

### 2. Membrane-electrode assembly for a water electrolysis cell

According to an embodiment, a membrane-electrode assembly for a water electrolysis cell comprises a polymer electrolyte membrane, an oxygen evolution electrode positioned on one surface of the polymer electrolyte membrane, and a hydrogen evolution electrode positioned on the other surface of the polymer electrolyte membrane.

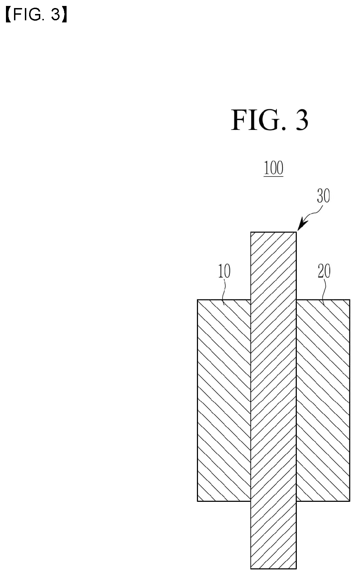

The membrane-electrode assembly for a water electrolysis cell is illustrated in FIG. 3. The membrane-electrode assembly (100) for a water electrolysis cell according to FIG. 3 comprises a polymer electrolyte membrane (30); an oxygen evolution electrode (10) positioned on one surface of the polymer electrolyte membrane; and a hydrogen evolution electrode (20) positioned on the other surface of the polymer electrolyte membrane.

The membrane-electrode assembly for a water electrolysis cell may have excellent durability by including the above-described catalyst for an oxygen evolution reaction.

For example, durability of the membrane-electrode assembly may be represented by a voltage increase rate. The voltage increase rate of the membrane-electrode assembly comprising the catalyst for an oxygen evolution reaction, represented by Equation 1 below, may be within a predetermined range. A specific measuring method of the voltage increase rate follows the method described in "Durability Evaluation" of the Evaluation Example 3 section in the present specification. [Equation 1] 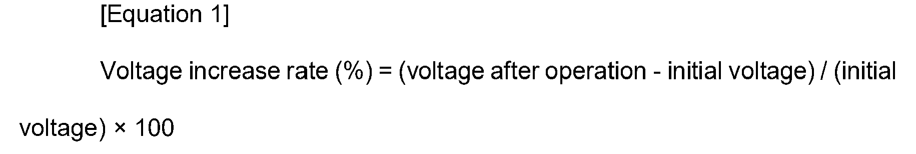 Voltage increase rate (%) = (voltage after operation - initial voltage) / (initial voltage) × 100

A lower limit of the voltage increase rate may be about 0.1%, 0.5%, 1%, 1.5%, 2%, 2.5%, 3%, 3.5%, 4%, 4.5%, 5%, or 5.5%, and an upper limit thereof may be about 7%, 6.5%, 6%, 5.5%, 5%, 4.5%, 4%, 3.5%, 3%, 2.5%, or 2%.

The voltage increase rate of the membrane-electrode assembly may be less than or equal to, or less than any one of the upper limits described above; or may have a range of greater than or equal to, or greater than any one of the lower limits described above and less than or equal to, or less than any one of the upper limits described above.

Hereinafter, the oxygen evolution electrode, the hydrogen evolution electrode, and the polymer electrolyte membrane will be described in detail.

The oxygen evolution electrode refers to an electrode in which an oxygen evolution reaction (OER) occurs.

The oxygen evolution electrode comprises the catalyst for an oxygen evolution reaction of a water electrolysis cell.

The catalyst for an oxygen evolution reaction of a water electrolysis cell is the same as described in the "1. Catalyst for an oxygen evolution reaction of a water electrolysis cell".

The oxygen evolution electrode may comprise the catalyst for an oxygen evolution reaction within a predetermined range based on 100 wt% of the oxygen evolution electrode. For example, a lower limit of a content of the catalyst for an oxygen evolution reaction may be about 70 wt% or 72 wt%, and an upper limit thereof may be about 98 wt% or 96 wt%.

The content of the catalyst for an oxygen evolution reaction may be greater than or equal to, or greater than, any one of the lower limits described above; less than or equal to, or less than, any one of the upper limits described above; or may have a range of greater than or equal to, or greater than, any one of the lower limits described above and less than or equal to, or less than, any one of the upper limits described above.

The oxygen evolution electrode may further include an ion conductor to improve adhesion of the catalyst and for hydrogen ion transfer.

The ion conductor may include a cation exchange group to secure ion conductivity.

The cation exchange group may be a sulfonic acid group, a carboxyl group, a boronic acid group, a phosphoric acid group, a phosphonic acid group, an imide group, a sulfonimide group, a sulfonamide group, or a sulfonic acid fluoride.

The ion conductor may be a fluorine-based ion conductor, a hydrocarbon-based ion conductor, or a mixture thereof.

The fluorine-based ion conductor may be a fluorine-based polymer having the cation exchange group in a side chain and containing fluorine in a main chain, for example, poly(perfluorosulfonic acid), poly(perfluorocarboxylic acid), or the like.

The hydrocarbon-based ion conductor may be a hydrocarbon-based polymer having the cation exchange group in a side chain [for example, sulfonated polyimide (S-PI), sulfonated polyarylethersulfone (S-PAES), sulfonated polyetheretherketone (SPEEK), sulfonated polybenzimidazole (SPBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, or the like].

According to an embodiment, the ion conductor may have hydrogen ion conductivity.

In the ion conductor having hydrogen ion conductivity, H in the cation exchange group at a terminal of the side chain may be substituted with Na, K, Li, Cs, or tetrabutylammonium. When substituting H with Na in the ion exchange group at the terminal of the side chain, substitution is performed using NaOH during preparation of the catalyst composition, when substituting with tetrabutylammonium, substitution is performed using tetrabutylammonium hydroxide, and substitution with K, Li, or Cs may also be performed using an appropriate compound. Since this substitution method is widely known in the art, a detailed description thereof will be omitted herein.

The content of the ion conductor may be appropriately adjusted as necessary, and in an example, a lower limit of the content of the ion conductor based on 100 parts by weight of the catalyst for an oxygen evolution reaction may be about 2 parts by weight or 4 parts by weight, and an upper limit thereof may be about 30 parts by weight or 28 parts by weight.

Based on 100 parts by weight of the catalyst for an oxygen evolution reaction, the ion conductor may be greater than or equal to, or greater than any one lower limit among the above-described lower limits; less than or equal to, or less than any one upper limit among the above-described upper limits; or may have a range of greater than or equal to, or greater than any one lower limit among the above-described lower limits and less than or equal to, or less than any one upper limit among the above-described upper limits. When the ion conductor is included within the range, performance and durability are excellent.

The ion conductor may be used in the form of a single substance or a mixture, and may also optionally be used together with a non-conductive compound to further improve adhesion to the polymer electrolyte membrane. The content of the non-conductive compound may be appropriately adjusted depending on the purpose of use.

As the non-conductive compound, at least one selected from polytetrafluoroethylene (PTFE), tetrafluoroethylene-hexafluoropropylene copolymer (FEP), tetrafluoroethylene-perfluoroalkyl vinyl ether copolymer (PFA), ethylene/tetrafluoroethylene (ETFE), ethylenechlorotrifluoro-ethylene copolymer (ECTFE), polyvinylidene fluoride, a copolymer of polyvinylidene fluoride-hexafluoropropylene (PVdF-HFP), dodecylbenzenesulfonic acid, and sorbitol may be used.

The hydrogen evolution electrode refers to an electrode in which a hydrogen evolution reaction (HER) occurs.

The hydrogen evolution electrode may include a catalyst for a hydrogen evolution reaction. The catalyst for a hydrogen evolution reaction may include active particles and a support.

The active particles may include a noble metal.

For example, the noble metal may be a platinum-based noble metal.

As the platinum-based noble metal (platinum based precious metal), platinum (Pt) and/or a Pt-M alloy may be used. The M may be palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), or rhodium (Rh).

Specifically, as the Pt-M alloy, Pt-Pd, Pt-Sn, Pt-Mo, Pt-Cr, Pt-W, Pt-Ru, Pt-Ni, Pt-Co, Pt-Y, Pt-Ru-W, Pt-Ru-Ni, Pt-Ru-Mo, Pt-Ru-Rh-Ni, Pt-Ru-Sn-W, Pt-Ru-Ir-Ni, Pt-Co-Mn, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir, or a mixture thereof may be used.

The support may be a carbon-based support.

The carbon-based support may be graphite, super P, carbon fiber, carbon sheet, carbon black, Ketjen Black, Denka black, acetylene black, carbon nano tube (CNT), carbon sphere, carbon ribbon, fullerene, active carbon, carbon nanofiber, carbon nanowire, carbon nanoball, carbon nanohorn, carbon nanocage, carbon nanoring, ordered nano-/meso-porous carbon, carbon aerogel, mesoporous carbon, graphene, stabilized carbon, activated carbon, or a combination thereof.

The oxygen evolution electrode and the hydrogen evolution electrode may each comprise only a catalyst layer comprising the catalyst for an oxygen evolution reaction and the catalyst for a hydrogen evolution reaction, respectively, but may comprise an electrode substrate together with the catalyst layer.

In this case, the electrode substrate may serve to support the electrode while serving to diffuse a fuel and an oxidant into the catalyst layer.

The electrode substrate may include a microporous layer, a porous diffusion layer, or a combination thereof.

The microporous layer serves to enhance a reactant diffusion effect, and may generally include a conductive powder having a small particle diameter, for example, carbon powder, carbon black, acetylene black, active carbon, a metal oxide nanowire, carbon fiber, fullerene, a carbon nanotube, a carbon nanowire, a carbon nano-horn, or a carbon nano ring.

The porous diffusion layer includes porous titanium (Porous Titnia), carbon paper, carbon cloth, carbon felt, or metal cloth (which refers to a porous film composed of a metal cloth in a fibrous state or a cloth formed of polymer fibers having a metal film formed on a surface thereof).

The microporous layer and the porous diffusion layer may comprise known ones in addition to those exemplified above.

As the electrode substrate, one subjected to a water-repellent treatment with a fluorine-based resin may be used, in which case degradation in reactant diffusion efficiency caused by water generated during operation of a water electrolysis cell may be prevented.

As the fluorine-based resin, polytetrafluoroethylene, polyvinylidene fluoride, polyhexafluoropropylene, polyperfluoroalkyl vinyl ether, polyperfluorosulfonyl fluoride, alkoxy vinyl ether, fluorinated ethylene propylene, polychlorotrifluoroethylene, or a copolymer thereof may be used.

The electrode substrate may enhance conductivity using platinum or the like and prevent corrosion of the porous diffusion layer caused by an ion conductor, thereby preventing a degradation of water electrolysis performance.

The polymer electrolyte membrane has an ion exchange function of transporting hydrogen ions generated at the oxygen evolution electrode to the catalyst for a hydrogen evolution reaction.

A polymer electrolyte membrane according to an embodiment may include a porous support including a plurality of pores, and an ion conductor filling the pores of the porous support.

The porous support may be a fluorine-based support or a nano-web support.

The fluorine-based support may correspond to, for example, expanded polytetrafluoroethylene (e-PTFE) having a microstructure of polymer fibrils, or a microstructure in which nodes are connected to each other by fibrils. In addition, a film having a microstructure of polymer fibrils in which the nodes do not exist may also be used as the porous support.

The nanoweb support may be a support in which nanofibers are integrated in the form of a non-woven fabric comprising a plurality of pores.

The ion conductor is the same as described above.

The ion conductor included in the polymer electrolyte membrane may be the same as or different from the ion conductor included in the oxygen evolution electrode, and for example, the ion conductor included in the polymer electrolyte membrane may be the same as the ion conductor included in the oxygen evolution electrode.

### 3. Water electrolysis cell

In an embodiment, a water electrolysis cell comprises the membrane-electrode assembly for a water electrolysis cell.

Since the water electrolysis cell is the same as known ones except for comprising the membrane-electrode assembly according to the present application, a detailed description thereof will be omitted.

### [Mode for Invention]

Hereinafter, embodiments of the present disclosure will be described in detail so that those of ordinary skill in the art to which the present disclosure pertains may easily implement them. However, the present disclosure may be implemented in various different forms and is not limited to the embodiments described herein.

### Example 1

As a catalyst for an oxygen evolution reaction of a water electrolysis cell, 0.5 g of IrO₂ (Alfa Aesar, 43396) was put into a reaction vessel, and then a plasma treatment process was performed for 10 seconds under conditions of 5 °C and 800 W with a 10% tetrafluoromethane (CF₄) gas, which is a fluorine-containing gas, at a flow rate of 30 sccm to manufacture composite active particles having a hydrophobic surface including a fluorine group formed on a surface of IrO₂ as core particles.

At this time, in the composite active particles, the fluorine group was included in an amount of 7 wt% based on 100 wt% of the core particles.

### Example 2

As a catalyst for an oxygen evolution reaction of a water electrolysis cell, 0.5 g of IrO₂ (Alfa Aesar, 43396) was put into a reaction vessel, and then 0.1 g of NH₄F as a fluorine-containing precursor was added. Thereafter, using a resonant acoustic mixer (RAM), stirring was performed while applying a gravitational acceleration of 80 g for 5 minutes at a frequency atmosphere of 60 Hz to prepare a mixture. Using a tube heat treatment apparatus (tube furnace), a heat treatment process was performed on the mixture at a temperature of 200 °C for 3 hours under a nitrogen atmosphere to prepare composite active particles in which a hydrophobic surface including a fluorine group was formed on a surface of IrO₂ as core particles.

At this time, in the composite active particles, the fluorine group was included in an amount of 7 wt% based on 100 wt% of the core particles.

### Example 3

As a catalyst for an oxygen evolution reaction of a water electrolysis cell, 0.5 g of IrO₂ (Alfa Aesar, 43396) was put into a reaction vessel, and then 100 ml of ethanol as a solvent and 0.5 g of 3-aminopropyltriethoxysilane from Sigma-Aldrich as a silane compound were added, and mixed while applying a gravitational acceleration of 80 g for 5 minutes at a frequency atmosphere of 60 Hz using a homogenizer to proceed with a hydrolysis/condensation reaction, thereby preparing composite active particles in which a hydrophobic surface layer including the silane compound was formed on a surface of IrO₂ as core particles.

At this time, the silane compound was included in an amount of 7 wt% based on 100 wt% of the core particles, an area of the hydrophobic surface layer was about 85% relative to a total surface area of the composite active particles, and a thickness of the hydrophobic surface layer was about 3 nm.

### Example 4

As a catalyst for an oxygen evolution reaction of a water electrolysis cell, 0.5 g of IrO₂ (Alfa Aesar, 43396) was put into a reaction vessel, and then 0.1 g of polyurethane (Sigma-Aldrich, polyurethane solution) was added, and mixed using a homogenizer to prepare composite active particles in which a hydrophobic surface layer including polyurethane was formed on a surface of IrO₂ as core particles.

At this time, the hydrophobic polymer was included in an amount of 10 wt% based on 100 wt% of the core particles, the area of the hydrophobic surface layer was about 75% relative to the total surface area of the composite active particles, and the thickness of the hydrophobic surface layer was about 5 nm.

### Comparative Example

As a catalyst for an oxygen evolution reaction of a water electrolysis cell, IrO₂ (Alfa Aesar, 43396), on which a separate surface treatment was not performed, was used alone.

### Evaluation Example 1. Measurement of contact angle with respect to water

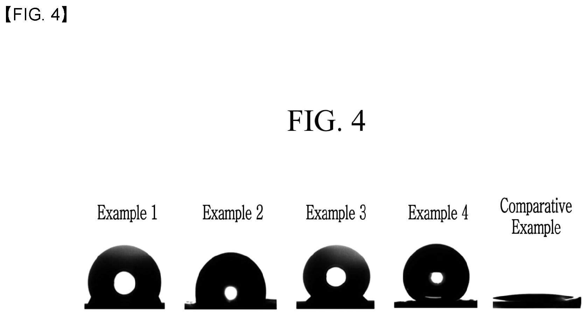

The catalysts for an oxygen evolution reaction of a water electrolysis cell prepared in Examples 1 to 4 and Comparative Example were put into an IR pellet manufacturing vessel and pressurized to 1,000 psi to manufacture a pellet having a thickness of 400 µm and a diameter of 13 mm. Using a Theta Flex device from Biolin, 5 µL of water was dropped onto the pellet at a rate of 1 µl/sec, and the contact angle with respect to water was measured according to a tangent angle measurement method. The results thereof are shown in Table 1 below and FIG. 4.

**[Table 1]**

| | Water contact angle (°) |
|---|---|
| Example 1 | 114.5 |
| Example 2 | 100 |
| Example 3 | 130 |
| Example 4 | 152.5 |
| Comparative Example | 18 |

### Evaluation Example 2. I-V characteristics

An electrode slurry was prepared by adding 20 parts by weight of an ion conductor dispersion and a solvent based on 100 parts by weight of the catalyst for an oxygen evolution reaction of a water electrolysis cell prepared in Examples 1 to 4 and Comparative Example, and the electrode slurry was directly coated on a polymer electrolyte membrane (Chemours, NR212) and then dried at 90 °C for 30 minutes to prepare a membrane-electrode assembly for a water electrolysis cell.

The prepared membrane-electrode assembly for a water electrolysis cell was applied inside a unit cell designed and manufactured for a water electrolysis cell, and measured by applying a protocol for measuring a voltage and a resistance at a specific current from 1 mA to 20 A under conditions of a cell temperature of 80 °C, a water temperature of 80 °C, and a flow rate of 5 ml/min, and the measurement was stopped at 2 V.

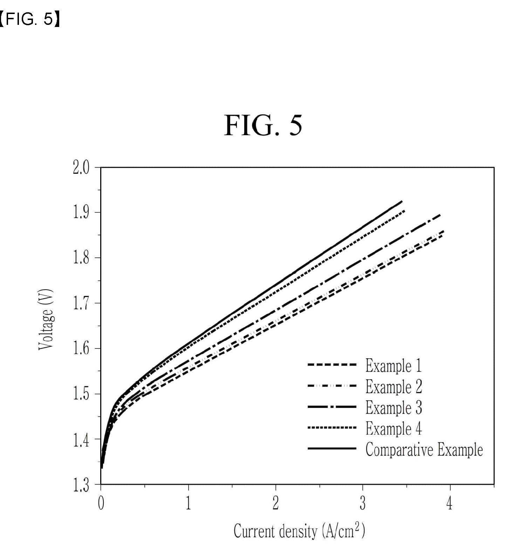

The results at this time are as shown in FIG. 5.

### Evaluation Example 3. Durability Evaluation

A membrane-electrode assembly was prepared in the same manner as the preparation method of Evaluation Example 2, the prepared membrane-electrode assembly was applied inside a unit cell designed and manufactured for a water electrolysis cell, an initial voltage of the cell that had undergone activation was measured under conditions of a cell temperature of 80 °C and a current density of 1 A/cm², and a voltage was measured after operating a constant current for 500 hours at a cell temperature of 80 °C and a current density of 1 A/cm².

The voltage was measured using a Potentiostat instrument manufactured by BioLogic, and the voltage increase rate was calculated according to Equation 1 below using the measured voltage. The results at this time are as shown in Table 2 below. [Equation 1] 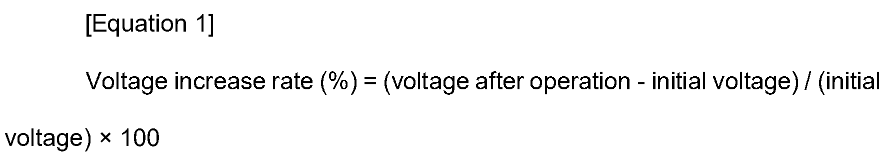 Voltage increase rate (%) = (voltage after operation - initial voltage) / (initial voltage) × 100

**[Table 2]**

| | Voltage Increase Rate (%) |
|---|---|
| Example 1 | 1.6 |
| Example 2 | 1.7 |
| Example 3 | 3.3 |
| Example 4 | 5.5 |
| Comparative Example | 8.2 |

### Result

According to FIG. 4, it may be confirmed that the contact angle with respect to water of the catalyst for an oxygen evolution reaction of Examples 1 to 4, in which the surface of the core particles is modified to be hydrophobic, is greater than that of the catalyst for an oxygen evolution reaction of the Comparative Example in which it is not.

According to FIG. 5, the membrane-electrode assembly comprising the catalyst for an oxygen evolution reaction of Examples 1 to 4, in which the surface of the core particles is modified to be hydrophobic, exhibits a higher current density at the same voltage compared to the Comparative Example in which it is not, and thus it may be confirmed that the performance is improved.

In addition, according to Table 2, the membrane-electrode assembly comprising the catalyst for an oxygen evolution reaction of Examples 1 to 4, in which the surface of the core particles is modified to be hydrophobic, has a significantly lower voltage increase rate compared to the Comparative Example in which it is not, and thus it may be confirmed that the durability is improved.

Although the preferred embodiments of the present disclosure have been described in detail above, the scope of the present disclosure is not limited thereto, and various modifications and improvements made by those skilled in the art using the basic concept of the present disclosure defined in the following claims also fall within the scope of the present disclosure.

### <Description of symbols>

1: core particle
2: hydrophobic surface layer
3: composite active particles
A: hydrophobic surface
100: membrane-electrode assembly for a water electrolysis cell
10: oxygen evolution electrode
20: hydrogen evolution electrode
30: polymer electrolyte membrane

## Claims

1. A catalyst for an oxygen evolution reaction of a water electrolysis cell comprising:
composite active particles comprising core particles comprising a noble metal oxide, and
having a hydrophobic surface including a fluorine group, a silane compound, a hydrophobic polymer, or a combination thereof.

2. The catalyst for an oxygen evolution reaction of a water electrolysis cell of claim 1, wherein
the composite active particles have a contact angle with respect to water in a range of 25° to 200°.

3. The catalyst for an oxygen evolution reaction of a water electrolysis cell of claim 1, wherein
the noble metal oxide includes IrOₓ (wherein x is an integer of 1 to 3), RuOₓ (wherein x is an integer of 1 to 3), IrMOₓ (wherein M includes Ru, Sn, Ti, Te, Ta, Nb, Sb, Se, W, or a combination thereof, and the x is an integer of 1 to 3), or a combination thereof.

4. The catalyst for an oxygen evolution reaction of a water electrolysis cell of claim 1, wherein
the composite active particles comprise the fluorine group in a range of 3 wt% to 20 wt% based on 100 wt% of the core particles.

5. The catalyst for an oxygen evolution reaction of a water electrolysis cell of claim 1, wherein
the composite active particles further comprise a hydrophobic surface layer positioned on the core particles, and
the hydrophobic surface layer comprises the fluorine group, the silane compound, the hydrophobic polymer, or a combination thereof.

6. The catalyst for an oxygen evolution reaction of a water electrolysis cell of claim 5, wherein
an area of the hydrophobic surface layer of the composite active particles is
in a range of 50% to 100% relative to the total surface area of the core particles.

7. The catalyst for an oxygen evolution reaction of a water electrolysis cell of claim 5, wherein
a thickness of the hydrophobic surface layer is from 1 nm to 8 nm.

8. The catalyst for an oxygen evolution reaction for a water electrolysis cell of claim 5, wherein
the fluorine group is derived from an organic fluorine compound, and
the hydrophobic surface layer comprising the fluorine group further comprises the organic fluorine compound.

9. The catalyst for an oxygen evolution reaction of a water electrolysis cell of claim 5, wherein
the silane compound
includes methyltrimethoxysilane, trimethylethoxysilane, trimethylchlorosilane, 3-aminopropyltrimethoxysilane, 3-aminopropyltriethoxysilane, 3-aminopropylmethyldiethoxysilane, a combination thereof, or a condensate thereof.

10. The catalyst for an oxygen evolution reaction of a water electrolysis cell of claim 5, wherein
the composite active particles
comprise the silane compound in a range of 5 wt% to 30 wt% based on 100 wt% of the core particles.

11. The catalyst for an oxygen evolution reaction of a water electrolysis cell of claim 5, wherein
the hydrophobic polymer includes an acrylic-based polymer, an epoxy-based polymer, a polyamide-based polymer, a polyethylene-based polymer, an EVC-based polymer, a polyester-based polymer, a PVC-based polymer, a polyurethane, or a combination thereof.

12. The catalyst for an oxygen evolution reaction of a water electrolysis cell of claim 5, wherein
the composite active particles
comprise the hydrophobic polymer in a range of 7 wt% to 40 wt% based on 100 wt% of the core particles.

13. The catalyst for an oxygen evolution reaction for a water electrolysis cell of claim 1, wherein
a content of the composite active particles is greater than or equal to 60 wt% based on 100 wt% of the catalyst for an oxygen evolution reaction.

14. The catalyst for an oxygen evolution reaction of a water electrolysis cell of claim 1,
further comprising a support supporting the composite active particles,
wherein the support comprises a metal oxide.

15. The catalyst for an oxygen evolution reaction of a water electrolysis cell of claim 14, wherein
the support is included in an amount of 10 parts by weight to 200 parts by weight relative to 100 parts by weight of the composite active particles.

16. A membrane-electrode assembly for a water electrolysis cell comprising:
a polymer electrolyte membrane;
an oxygen evolution electrode positioned on one surface of the polymer electrolyte membrane and comprising the catalyst for an oxygen evolution reaction of a water electrolysis cell of claim 1; and
a hydrogen evolution electrode positioned on the other surface of the polymer electrolyte membrane.

17. The membrane-electrode assembly for a water electrolysis cell of claim 16, wherein
a voltage increase rate represented by Equation 1 below is less than or equal to 7%: [Equation 1] 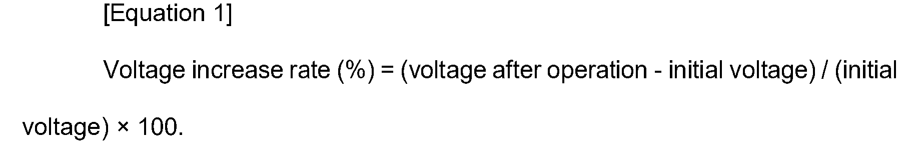 Voltage increase rate (%) = (voltage after operation - initial voltage) / (initial voltage) × 100.

18. A water electrolysis cell comprising the membrane-electrode assembly of claim 17.
